# EUROPEAN PATENT SPECIFICATION

(11) **EP 4 419 392 B1**
(45) Date of publication and mention of the grant of the patent: **09.12.2026**
(21) Application number: 21798637.1
(22) Date of filing: 21.10.2021
(51) Int. Cl.: B60R 5/04

(54) **POWERED VEHICLE LOAD SPACE COVER RECALIBRATION**
REKALIBRIERUNG EINER LADERAUMABDECKUNG FÜR EIN ANGETRIEBENES FAHRZEUG
RÉÉTALONNAGE DE COUVERCLE D'ESPACE DE CHARGE DE VÉHICULE MOTORISÉ

(43) Date of publication of application: 28.08.2024
(73) Proprietor: Jaguar Land Rover Limited, Coventry, Warwickshire CV3 4LF (GB)
(72) Inventor: LEVY, Rob, Coventry Warwickshire CV3 4lf (GB); SHERRATT, Oliver, Coventry Warwickshire CV3 4lf (GB)
(74) Representative: Jaguar Land Rover Patents Department
(86) International application number: PCT/EP2021/079188
(87) International publication number: WO 2023/066486

(56) References cited:
- WO-A1-2021/026602
- GB-A- 2 527 054
- US-B1- 6 404 158
- US-B2- 7 725 231

## Description

### TECHNICAL FIELD

The present disclosure relates to powered vehicle load space cover recalibration. In particular, but not exclusively it relates to a control system, a vehicle, a method and computer software for recalibrating a powered vehicle rear load space cover.

### BACKGROUND

An example of a vehicle load space cover is a shelf extending over the trunk (load space) of a vehicle. Some vehicle load space covers comprise a membrane or foldable/unfoldable panels and can be manually deployed between extended and retracted positions while a vehicle tailgate (trunk lid) is open. Some vehicle load space covers can be automatically deployed by an actuator and are referred to herein as powered vehicle load space covers.

A powered vehicle load space cover may deploy, in normal use, until a physical travel stop is reached and the load space cover cannot deploy further. The load space cover may 'clunk' into the physical travel stop position and the noise of the actuator may briefly increase until the physical travel stop has been reactively detected.

GB2527054 discloses a vehicle which comprises a retractable load space cover; means for coupling the cover; and means for guiding the coupling means along a predefined path.

WO2021/026602 discloses a rollcover mechanism for a rollcover on a vehicle enables the rollcover to be movable between a fully open position and a fully closed position.

### SUMMARY OF THE INVENTION

It is an aim of the present invention to address one or more of the disadvantages associated with the prior art.

Aspects and embodiments of the invention provide a control system, a vehicle, a method, and computer software, as claimed in the appended claims.

According to an aspect of the invention there is provided a control system for controlling a powered vehicle load space cover, the control system comprising one or more controllers, the control system configured to: request an actuator to deploy the powered vehicle load space cover to a target position; receive from a first sensing means (first sensor) a position feedback signal during the deployment, indicative of how far the actuator has deployed the powered vehicle load space cover; continue to request the deployment until a calibrated target value of the position feedback signal is reached, indicating that the target position has been reached; monitor whether a recalibration condition is satisfied; and based on satisfaction of the recalibration condition, cause a recalibration of the target value, wherein the recalibration comprises: requesting the actuator to deploy the powered vehicle load space cover until a physical travel stop is reached; receiving from a second sensing means (second sensor) a calibration reference signal, different from the position feedback signal, that is configured to indicate when the physical travel stop is reached; and in dependence on the calibration reference signal indicating the physical travel stop, modifying the target value relative to a value of the position feedback signal corresponding to the physical travel stop.

An advantage of the calibration and recalibration process is reducing noise, vibration and harshness disturbance to the user from the powered vehicle load space cover. By estimating the position of the load space cover, the control system is able to stop the actuation just before the load space cover 'hits' a physical travel stop, and further the control system may implement a soft close function described herein.

In dependence on satisfaction of the recalibration condition, the recalibration comprises: causing the recalibration of the target value in response to a first request, initiated by a first user action at a first time, to deploy the powered vehicle load space cover in a first direction, wherein the deployment to the physical travel stop is in the first direction; and causing recalibration of a second target value of the position feedback signal in response to a second request, initiated by a second different user action at a second later time, to deploy the powered vehicle load space cover in a second direction opposite the first direction, wherein the recalibration of the second target value comprises: requesting the actuator to deploy the powered vehicle load space cover until a second physical travel stop is reached; receiving the calibration reference signal; and in dependence on the calibration reference signal indicating the second physical travel stop, modifying the second target value relative to a value of the position feedback signal corresponding to the second physical travel stop.

An advantage is reducing disturbance of the user of the vehicle when recalibration is taking place. This is because the direction of deployment for recalibration is a user-requested direction only. In order to recalibrate the opposite end position for the opposite deployment direction, the method may have to wait until next time the user requests deployment in the second direction. This ensures that the load space cover appears to behave normally as if recalibration is not taking place.

The first user action may comprise causing opening of a vehicle tailgate associated with the vehicle load space cover, and wherein the second user action may comprise causing closing of the vehicle tailgate. Alternatively, the first user action may comprise user actuation of a cover extension user input control, and the second user action may comprise user actuation of a cover retraction user input control.

An advantage is minimising disturbance to the user, because the recalibration can be carried out automatically, during normal end user use of the powered vehicle load space cover.

The recalibration condition is based on a number of deployments of the powered vehicle load space cover, and/or a time and/or mileage, since a previous calibration or a previous recalibration.

An advantage of a recalibration condition based on a number of deployments or mileage is minimising disturbance to the user, because the frequency of recalibration can be adapted to the user's actual usage of the powered vehicle load space cover.

The control system may be configured to abort the recalibration in dependence on the calibration reference signal indicating a physical travel stop while a value of the position feedback signal is outside an acceptable range of values.

An advantage is more reliable recalibration, because it is less likely that an obstacle will be misinterpreted as the physical travel stop.

The control system may be configured to: receive an obstacle reference signal from the second sensing means, the obstacle reference signal configured to indicate whether the powered vehicle load space cover is obstructed; and cease requesting the actuator to deploy the powered vehicle load space cover to the target position in dependence on the obstacle reference signal indicating that the powered vehicle load space cover is obstructed. The obstacle reference signal may be the same signal as the calibration reference signal, i.e., the same second sensing means may advantageously be used for both in-use obstacle detection and for recalibration.

The first sensing means may comprise one or more Hall effect sensors. The second sensing means may comprise a load measuring circuit, indicative of a load on the actuator. An advantage is minimising the use of additional sensors because the sensing means may be existing sensing means of the actuator, for motor control.

The control system may be configured to request the deployment to the target position at a first speed until a soft close value based on the position feedback signal is reached, and to request the deployment to the target position at a second slower speed after the soft close value of the position feedback signal is reached. Additionally, or alternatively, the calibrated target value and the modified target value may be within 5% of, but not the same as, the value of the position feedback signal corresponding to the physical travel stop.

An advantage is reduced noise, vibration and harshness from the powered vehicle load space cover.

According to an aspect of the invention there is provided a powered vehicle load space cover system comprising the control system, the actuator, and the powered vehicle load space cover.

According to an aspect of the invention there is provided a vehicle comprising the powered vehicle load space cover system or the control system.

According to an aspect of the invention there is provided a method of controlling a powered vehicle load space cover, the method comprising: requesting an actuator to deploy the powered vehicle load space cover to a target position; receiving from a first sensing means a position feedback signal during the deployment, indicative of how far the actuator has deployed the powered vehicle load space cover; continuing to request the deployment until a calibrated target value of the position feedback signal is reached, indicating that the target position has been reached; monitoring whether a recalibration condition is satisfied wherein the recalibration condition is based on a number of deployments of the powered vehicle load space cover, and/or a time and/or mileage, since a previous calibration or a previous recalibration; and based on satisfaction of the recalibration condition, causing a recalibration of the target value, wherein the recalibration comprises: causing the recalibration of the target value in response to a first request, initiated by a first user action at a first time, to deploy the powered vehicle load space cover in a first direction, wherein the deployment to the physical travel stop is in the first direction, wherein the recalibration of the target value comprises: requesting the actuator to deploy the powered vehicle load space cover until a physical travel stop is reached; receiving from a second sensing means a calibration reference signal, different from the position feedback signal, that is configured to indicate when the physical travel stop is reached; and in dependence on the calibration reference signal indicating the physical travel stop, modifying the target value relative to a value of the position feedback signal corresponding to the physical travel stop; causing recalibration of a second target value of the position feedback signal in response to a second request, initiated by a second different user action at a second later time, to deploy the powered vehicle load space cover in a second direction opposite the first direction, wherein the recalibration of the second target value comprises: requesting the actuator to deploy the powered vehicle load space cover until a second physical travel stop is reached; receiving the calibration reference signal; and in dependence on the calibration reference signal indicating the second physical travel stop, modifying the second target value relative to a value of the position feedback signal corresponding to the second physical travel stop.

According to an aspect of the invention there is provided computer software that, when executed, is arranged to perform any one or more of the methods described herein.

According to an aspect of the invention there is provided a non-transitory computer-readable storage medium comprising instructions that, when executed, is arranged to perform any one or more of the methods described herein.

Within the scope of this application it is expressly intended that the various aspects, embodiments, examples and alternatives set out in the preceding paragraphs, in the claims and/or in the following description and drawings, and in particular the individual features thereof, may be taken independently or in any combination that falls within the scope of the appended claims. That is, all embodiments and/or features of any embodiment can be combined in any way and/or combination that falls within the scope of the appended claims, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
FIG. 1 illustrates an example of a vehicle;
FIG. 2 illustrates an example of a powered vehicle load space cover system;
FIG. 3 illustrates an example of a control system;
FIG. 4 illustrates an example of a non-transitory computer-readable storage medium;
FIG. 5 illustrates an example of a runner system;
FIG. 6 illustrates an example of Hall effect sensors and signal characteristics associated therewith;
FIG. 7 illustrates an example of a deployment method; and
FIG. 8 illustrates an example of a recalibration method.

### DETAILED DESCRIPTION

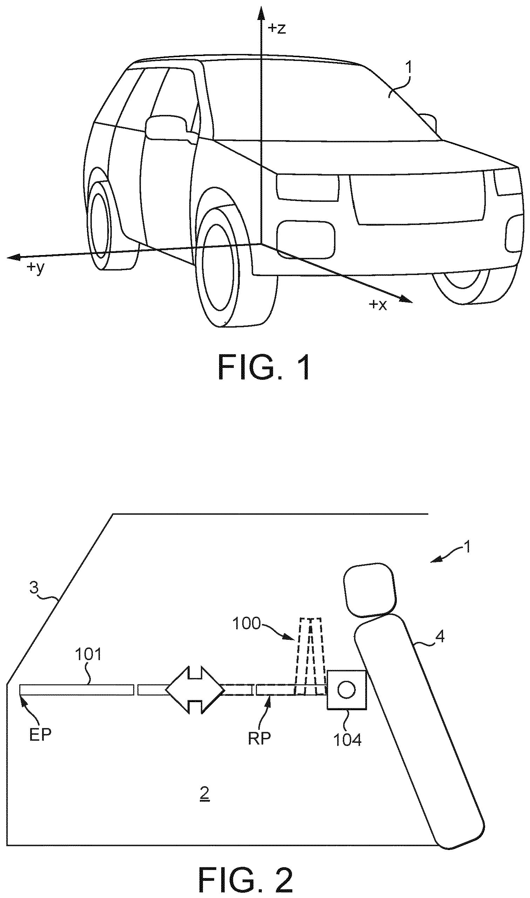

FIG. 1 illustrates an example of a vehicle in which embodiments of the invention can be implemented. In some, but not necessarily all examples, the vehicle 1 is a passenger vehicle, also referred to as a passenger car or as an automobile. In other examples, embodiments of the invention can be implemented for other applications, such as commercial vehicles.

FIG. 1 is a front perspective view and illustrates a longitudinal x-axis between the front and rear of the vehicle 1 representing a centreline, an orthogonal lateral y-axis between left and right lateral sides of the vehicle 1, and a vertical z-axis. A forward/fore direction typically faced by a driver's seat is in the positive x-direction; rearward/aft is -x. A rightward direction as seen from the driver's seat is in the positive y-direction; leftward is -y. These are a first lateral direction and a second lateral direction.

FIG. 2 schematically illustrates a side view of a load space 2 of a vehicle 1 and a powered vehicle load space cover system 100.

The load space 2 may comprise a rear load space, accessible via a vehicle tailgate 3 of the vehicle 1.

The system 100 comprises a load space cover 101 located above a floor of the load space 2, and an actuator 104 configured to deploy the load space cover 101 between an extended configuration and a retracted configuration.

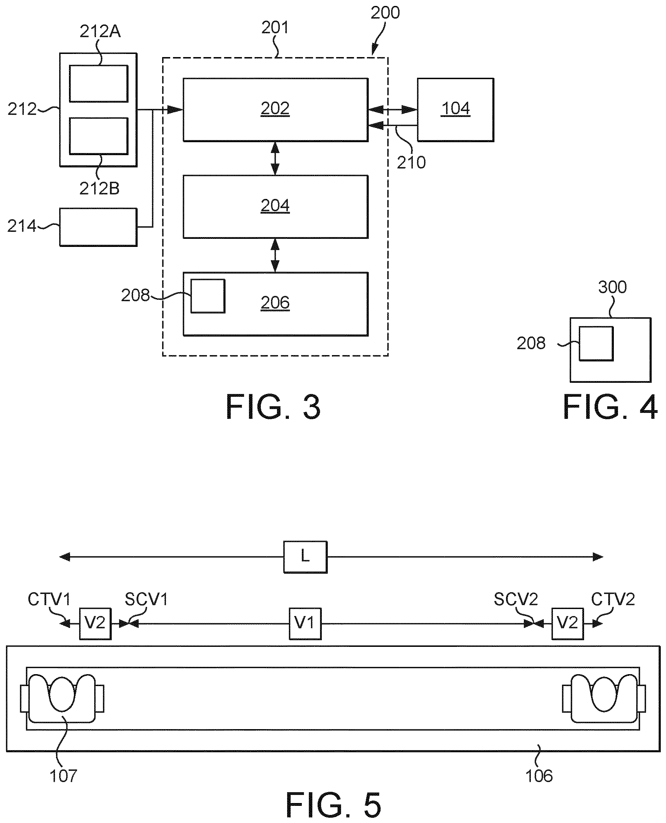

In the extended configuration, the load space cover 101 extends over a substantial portion of the load space 2. The load space cover 101 may extend in a generally horizontal orientation. In the extended configuration, a reference point of the load space cover 101 is at an extended position EP. The reference point may comprise a movable carriage 107 mounted to a runner system 106 as shown in FIG. 5, or similar.

In the retracted configuration, the load space cover 101 does not extend over a substantial portion of the load space 2. The load space cover 101 is folded or otherwise compacted into a small plan view area. In the retracted configuration, the reference point (e.g., movable carriage 107) of the load space cover 101 is at a retracted position RP.

In some, but not necessarily all examples, the retracted position RP is located fore of the extended position EP in the vehicle 1. The retracted position RP may be proximal to a seat back of a seat 4 of the vehicle 1. The extended position EP may be proximal to the vehicle tailgate 3.

The illustrated load space cover 101 comprises a plurality of hinged foldable panels, configured to unfold and align end-to-end/side-by-side with each other when the load space cover 101 is in the extended configuration and configured to fold out of the relative alignment when the load space cover 101 is actuated to the retracted configuration. When the load space cover 101 is in the retracted configuration, the hinged interconnected panels may be in a stacked or zigzag configuration.

In an alternative example, the load space cover 101 comprises a membrane such as a flexible fabric.

An advantage of hinged foldable panels is that their relatively high rigidity and density better isolates the cabin of the vehicle 1 from noise in the tailgate 3.

However, the panels may be susceptible to a slapping or clunking noise when they are fully extended. This is addressed herein by deploying the load space cover 101 to a target position slightly before the foldable panels reach full extension/retraction (physical travel stops), and can further be addressed with the use of a soft close function described herein.

The actuator 104 can comprise any appropriate electric motor. The actuator 104 may be coupled to the load space cover 101 by any appropriate mechanism, such as a pulley system (not shown) connected to the runner system 106 of FIG. 5. In some examples, the load space cover is removable from the runner system 106 for separate stowing.

FIG. 3 schematically illustrates a control system 200 for controlling the actuator 104. The control system 200 comprises a controller 201. In other examples, the control system 200 may comprise a plurality of controllers on-board and/or off-board the vehicle 1. In some examples, a control system 200 or a controller 201 may be supplied as part of the system 100.

The controller 201 of FIG. 3 includes at least one processor 204; and at least one memory device 206 electrically coupled to the electronic processor 204 and having instructions (e.g., a computer program 208) stored therein, the at least one memory device 206 and the instructions configured to, with the at least one processor 204, cause any one or more of the methods described herein to be performed.

The processor 204 may have an interface 202 such as an electrical input/output I/O or electrical input for receiving information and interacting with external components such as the actuator 104.

FIG. 4 illustrates a non-transitory computer-readable storage medium 300 comprising the instructions 208 (computer software).

The control system 200 may be configured to send instructions to the actuator 104 and may be configured to receive feedback from the actuator 104. The control system 200 may receive feedback from first sensing means 600, 602 and second sensing means 210.

The first sensing means 600, 602 may comprise one or more Hall effect sensors configured to sense the position of a rotor of the actuator 104.

The second sensing means 210 may comprise a load measuring circuit configured to enable the control system 200 to detect a load on the actuator 104, either directly by measuring electrical current/power draw by the actuator 104 or indirectly by estimating load from measured actuator speed. In some examples, actuator speed comprises the differential of actuator position from the Hall effect sensors 600, 602.

The control system 200 may also be configured to receive inputs from other sources.

For example, FIG. 3 illustrates a human-machine interface 212 operably coupled to the control system 200. The human-machine interface 212 can comprise a touch display or can comprise tactile input devices, or the like.

The human-machine interface 212 provides one or more user input controls for manually initiating deployment of the load space cover 101. The one or more user input controls can comprise a cover extension user input control 212A and a cover retraction user input control 212B.

A first user action comprising user actuation of the cover extension user input control 212A may cause the control system 200 to set the extended position EP of the load space cover 101 as a target position, and to initiate deployment of the load space cover 101 to the extended configuration.

A second user action comprising user actuation of the cover retraction user input control 212B may cause the control system 200 to set the retracted position RP of the load space cover 101 as a target position, and to initiate deployment of the load space cover 101 to the retracted position.

The cover extension user input control 212A and the cover retraction user input control 212B may be separate input controls or may be combined via a multi-function user input control.

In some examples, the control system 200 is configurable in an automatic mode. In the automatic mode, the control system 200 is configured to receive information from a tailgate opening sensor 214.

In response to the tailgate opening sensor 214 indicating that the tailgate 3 is in an open position, the control system 200 may set the retracted position RP of the load space cover 101 as a target position, and may initiate deployment of the load space cover 101 to the retracted position.

In response to the tailgate opening sensor 214 indicating that the tailgate 3 is in a closed position, the control system 200 may set the extended position EP of the load space cover 101 as a target position, and may initiate deployment of the load space cover 101 to the extended position.

This automatic mode enables the load space cover 101 to deploy without further user intervention beyond opening or closing the tailgate 3.

Automatic mode may be engageable and disengageable via a user input control, for example.

With reference to FIGS. 5-6, a control scheme is described which enables the control system 200 to estimate the position of the load space cover 101. By estimating the position of the load space cover 101, the control system 200 is able to reduce noise, vibration and harshness (NVH) attributes by stopping the actuation just before the load space cover 101 'hits' a physical travel stop, and further reduces NVH by implementing the soft close function described herein.

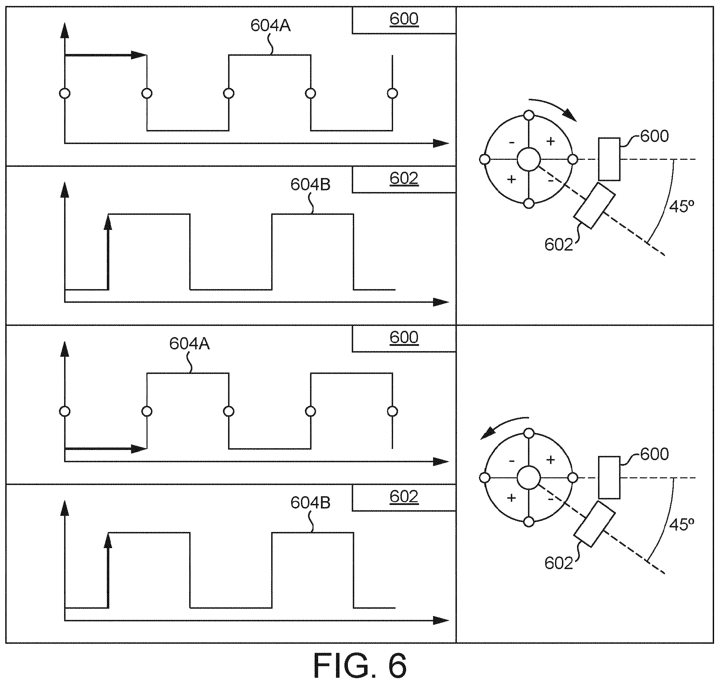

FIG. 6 illustrates first sensing means 600, 602 comprising Hall effect sensors. The Hall effect sensors are positioned around a rotating magnetic field having a rotation speed based on the rotation speed of the actuator 104.

The Hall effect sensors 600, 602 detect the polarity reversals associated with the rotating magnetic field and therefore output a variable position feedback signal or signals 604A, 604B whose frequency is based on the rotation speed of the actuator 104.

The use of at least two Hall effect sensors 600, 602 with a sufficient angular separation therebetween (e.g., 45 degrees) enables the position of the actuator 104 to be ascertained from the position feedback signal 604A, 604B.

It would be appreciated that a different type of sensor can be used than a Hall effect sensor, such as a different type of motor turn sensor, or microswitches at one or each of the retracted and extended positions RP, EP of the load space cover 101.

However, an advantage of Hall effect sensors 600, 602 of the actuator 104 is that these may be existing sensors of the actuator 104, so no extra sensors are required and no extra wiring is required.

During the deployment of the load space cover 101, the control system 200 may be configured to receive from the first sensing means 600, 602 the position feedback signal 604A, 604B which indicates how far the actuator 104 has deployed the load space cover 101.

The control system 200 may be configured to implement a motor turn counting (e.g., Hall counting) scheme to count the changes of the position feedback signal 604A, 604B, wherein each change (count increment) corresponds to a physical distance travelled by the load space cover 101. In an example implementation, each 0.58 motor turns corresponds to one millimetre of travel of the load space cover 101.

The control system 200 may store calibration data (e.g., number of motor turns) relating the position feedback signal 604A, 604B to a particular position of the load space cover 101.

During deployment of the load space cover 101, the target position may be represented by a calibrated target value of the position feedback signal 604A, 604B.

The extended position EP may be represented by a first calibrated target value CTV1 (FIG. 5) such as a first predetermined number of motor turns. FIG. 5 illustrates the position of the first calibrated target value CTV1, towards a first physical travel stop of the runner system 106.

The retracted position RP may be represented by a second calibrated target value CTV2 (FIG. 5) such as a second predetermined number of motor turns. FIG. 5 illustrates the position of the second calibrated target value CTV2, towards a second physical travel stop of the runner system 106.

The first physical travel stop refers to a position along the runner system 106 at which the load space cover 101 is fully extended and cannot extend further, whether or not the carriage 107 has hit the end of the runner system 106.

The second physical travel stop refers to a position along the runner system 106 at which the load space cover 101 is fully retracted and cannot retract further, whether or not the carriage 107 has hit the end of the runner system 106.

In some examples, the first and second calibrated target values CTV1, CTV2 are within X% of the respective first and second physical travel stops, wherein X is a value selected from the range 95% to 99%. This is to obviate the noise associated with a physical travel stop being reached.

In an example implementation, if the load space cover 101 is to be deployed to the extended position EP, the first predetermined number of motor turns is used to define the target position of the load space cover 101. If the load space cover 101 is to be deployed to the retracted position RP, the second predetermined number of motor turns is used to define the target position of the load space cover 101.

The first and second calibrated target values CTV1, CTV2 may be determined by factory calibration, for example at the end of an assembly line. The first and second calibrated target values CTV1, CTV2 may be recalibrated periodically during the service life of the vehicle 1, to correct drift in the known position of the load space cover 101 that occurs as a result of cumulative missed motor turn counts.

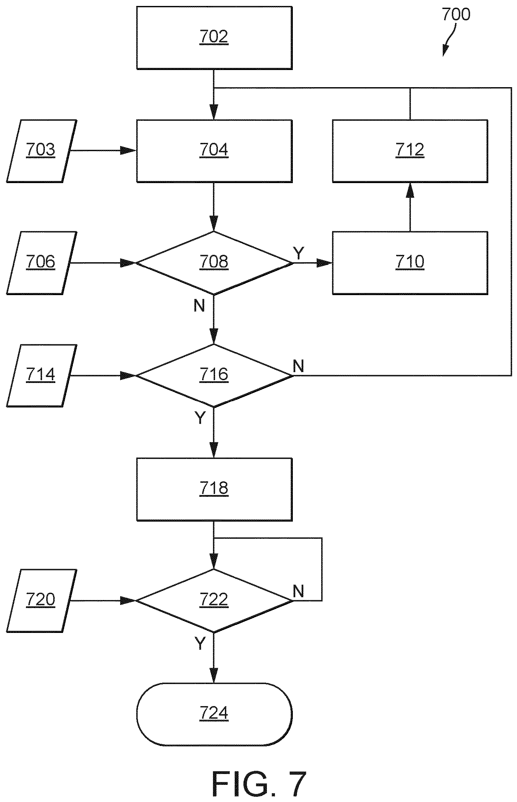

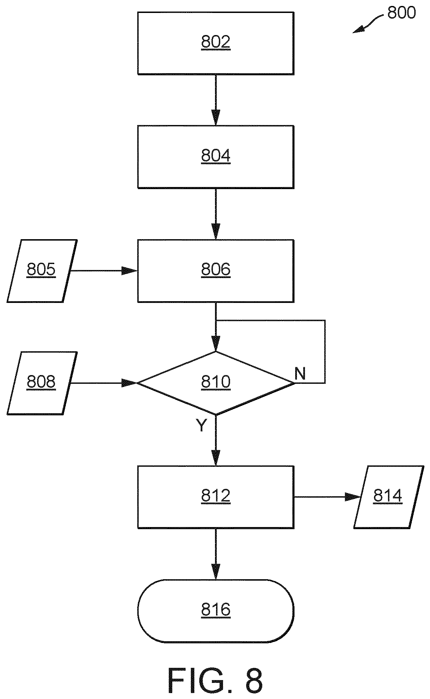

Flowcharts are illustrated in FIGS. 7 and 8. FIG. 7 illustrates an example deployment method 700 and FIG. 8 illustrates an example in-service recalibration method 800.

First, the deployment method 700 of FIG. 7 is described. The deployment method 700 can be implemented by the control system 200. It would be appreciated that the illustrated order of the blocks is for illustrative purposes only and does not represent the only way to implement deployment method 700.

Block 702 comprises determining that a deployment entry condition is satisfied. The deployment entry condition can comprise receiving a deployment request.

The deployment request can be initiated by user actuation of the cover extension user input control 212A or of the cover retraction user input control 212B.

If automatic, the deployment request can be initiated by opening of the vehicle tailgate 3 or closing of the vehicle tailgate 3.

Block 704 comprises requesting the actuator 104 to deploy the load space cover 101 to a target position.

The target position is either the first calibrated target value CTV1 or the second calibrated target value CTV2, depending on whether the deployment request requires extension or retraction of the load space cover 101.

The request block 704 receives, from data block 703, the position feedback signal 604A, 604B from the first sensing means 600, 602 during the deployment. The position feedback signal 604A, 604B is indicative of how far the actuator 104 has deployed the powered vehicle load space cover 101 towards the target position.

Block 708 is an optional decision block relating to obstacle detection during the deployment. An obstacle can be, for example, an item of cargo in the path of the load space cover 101.

Block 708 comprises receiving, from data block 706, an obstacle reference signal from the second sensing means 210. The obstacle reference signal may comprise, for example, a signal from the load measuring circuit, indicating the load on the actuator 104.

If the load increases beyond a threshold (e.g., rising current/power or falling speed), then block 708 determines that the obstacle reference signal indicates that the load space cover 101 is contacting an obstruction, causing actuator load to rise.

If the load space cover 101 is obstructed, the method 700 proceeds to block 710. While the load space cover 101 is not obstructed, the deployment continues.

Block 710 comprises ceasing requesting the actuator 104 to deploy the load space cover 101 to the target position, to prevent displacement of the obstacle. The request may be ceased before any significant force is exerted on the obstacle.

In some examples, block 710 further comprises deploying the load space cover 101 in the opposite direction by a predetermined distance (e.g., 1-15cm) or to its starting position (position at block 702), to break any contact between the load space cover 101 and the obstacle.

Block 712 comprises receiving a resume signal to resume deployment of the load space cover 101. The resume signal may comprise a manual resume signal, after the user has cleared the obstacle.

A manual resume signal can be initiated by user actuation of the cover extension user input control 212A or the cover retraction user input control 212B.

In some examples, the resume signal cannot be initiated automatically by detected opening or closing of the tailgate 3.

In response to the resume signal, the method 700 loops back to block 704 and to resume deploying the load space cover 101 to the target value. In another example, the method 700 terminates such that the resume signal is seen as a new request (block 702) for deployment of the load space cover 101.

As well as the obstacle detection, another optional soft close decision block 716 is provided, during the deployment. Block 716 comprises determining whether a soft close condition is satisfied.

Block 716 comprises receiving, from data block 714, the position feedback signal 604A, 604B from the first sensing means 600, 602, and determines whether a soft close value SCV1 or SCV2 (FIG. 5) based on the position feedback signal 604A, 604B is reached.

If the soft close value SCV1 or SCV2 is reached, then the method 700 proceeds to block 718 which implements a soft close function to complete the deployment at a slower speed. This reduces noise, vibration and harshness as the load space cover 101 settles into its extended position or retracted position.

If the soft close value SCV1 or SCV2 has not been reached, the method 700 loops back to block 704 which continues deployment at the normal higher speed.

The soft close value SCV1 or SCV2 may comprise a predetermined number of motor turns, related to a particular position of the load space cover 101 based on calibration data.

The distance from the soft close value SCV1 or SCV2 to the calibrated target value CTV1 or CTV2 is less than 20% of the span length L of the load space cover 101. This can be seen in FIG. 5 where the positions of first and second soft close values SCV1, SCV2 are illustrated.

Block 718 comprises implementing the soft close function. With reference to FIG. 5, the control system 200 reduces the speed of the actuator 104 to slow the deployment from a first speed V1 to a second, lower soft close speed V2 between SCV1-CTV1 and between SCV2-CTV2.

The method 700 further comprises a decision block 722 relating to whether the target position has been reached, indicating completion of deployment. Block 722 comprises receiving, from data block 720, the position feedback signal 604A, 604B, and comprises determining whether the calibrated target value is reached, indicating that the target position of the load space cover 101 has been reached.

If block 722 is not satisfied, it may loop until it is satisfied. If block 722 is satisfied, the method 700 may end at termination block 724.

Next, the recalibration method 800 of FIG. 8 is described. The recalibration method 800 can be implemented by the control system 200. It would be appreciated that the illustrated order of the blocks is for illustrative purposes only and does not represent the only way to implement recalibration method 800.

In summary, the intermittently repeated recalibration method 800 deploys the load space cover 101 until a physical travel stop is reached. The number of motor turns corresponding to the physical travel stop is determined based on the position feedback signal 604A, 604B. The calibrated target values CTV1, CTV2 and soft close values SCV1 or SCV2 can then be set relative to the number of motor turns corresponding to the physical travel stop.

Block 802 comprises monitoring whether a recalibration condition is satisfied. If the recalibration condition is satisfied, the method 800 proceeds. If not satisfied, the method 800 does not proceed.

In at least some examples, the recalibration condition is based on a predetermined number of deployments since a previous factory calibration or previous performance of the recalibration method 800. In a non-limiting example, the predetermined number of deployments may be a value greater than 100 deployments, such that recalibration is performed infrequently. This is because position drift is considered to increase with each usage of the load space cover 101, rather than based on time or mileage alone. However, in other examples the recalibration condition may be based on time and/or mileage or the like.

In some examples, when the recalibration condition is satisfied, the load space cover 101 is not deployed for recalibration suddenly and unexpectedly. This may be distracting to the occupants of the vehicle 1. Instead, the recalibration is performed when normal deployment of the load space cover 101 is next requested by a user.

Block 804 therefore comprises determining that a recalibration initiation condition is satisfied. The recalibration initiation condition may comprise at least some of the same criteria as the deployment entry condition of block 702. That is, when the user manually or automatically requests the deployment, the deployment is performed with recalibration.

In some examples, the human-machine interface 212 may comprise a service mode input, such as a long-press of the cover extension user input control 212A or the cover retraction user input control 212B. The service mode input may request immediate recalibration, therefore satisfying both the recalibration condition and the recalibration initiation condition.

Block 806 comprises requesting the actuator 104 to deploy the load space cover 101 until the physical travel stop is reached. The direction of deployment is the user-requested direction. The position feedback signal 604A, 604B may be received from the data block 805. The control system 200 may count the motor turns to reach the physical travel stop.

In some examples, the direction of deployment is the user-requested direction only. In order to recalibrate the opposite end position for the opposite deployment direction the method 800 will have to wait until next time the user requests deployment in the second direction. This ensures that the load space cover 101 appears to behave normally as if recalibration is not taking place. The only subtle indication of the recalibration may be that the load space cover 101 reaches the physical travel stop so there may be slightly more noise. Further, the deployment may be slower than normal to minimise the chance of missed motor turn counts.

In other words, the control system 200 can recalibrate one end position on opening and one on closing. Periodically when the load space cover 101 extends, the method 800 automatically performs half a recalibration cycle to relearn one end position (first calibrated target value, first soft close value). Then, on the next retraction, the method 800 is re-run to relearn the other end position (second calibrated target value, second soft close value).

Block 810 is a decision block querying whether the physical travel stop has been reached.

Block 810 receives, from data block 808, a calibration reference signal from the second sensing means 210. The calibration reference signal is configured to indicate when the physical travel stop is reached.

If the physical travel stop is reached, the method 800 proceeds to block 812 to complete the recalibration. If not reached, block 810 loops until satisfied.

The calibration reference signal may be the same type of signal as the obstacle reference signal, i.e., the load on the actuator 104. It could be said that the recalibration method 800 uses the obstacle detection algorithm to detect the physical travel stop. If the load rises above a threshold, the physical travel stop has been reached.

In some examples, a further criterion is introduced to block 810 to prevent an unexpected obstacle from being misinterpreted as the physical travel stop, during recalibration.

The further criterion may comprise an acceptable range of values of the position feedback signal 604A, 604B. For example, the method 800 may abort the recalibration in dependence on the calibration reference signal indicating a (false) physical travel stop while a value of the position feedback signal 604A, 604B is outside an acceptable range of values.

The acceptable range of values may be implemented as a minimum threshold number of motor turns/distance travelled. By requiring at least a minimum distance travelled (number of motor turns), it is much less likely that an obstacle will be misinterpreted as the physical travel stop.

Block 812 comprises modifying a calibrated target value (data block 814) relative to the value of the position feedback signal 604A, 604B corresponding to the physical travel stop.

For example, if the load space cover 101 was deployed to the extended position, the first calibrated target value CTV1 and the first soft close value SCV1 may be modified. The new number of motor turns corresponding to the modified first calibrated target value CTV1 may be equal to the number of motor turns corresponding to the first physical travel stop, wherein some turns may be subtracted if the load space cover 101 is to stop slightly short of the first physical travel stop in normal use. The soft close value SCV1 may be modified using a similar approach.

If the load space cover 101 was deployed to the retracted position, the second calibrated target value CTV2 and the second soft close value SCV2 may be modified. The new number of motor turns corresponding to the modified second calibrated target value CTV2 may be equal to the number of motor turns corresponding to the second physical travel stop, wherein some turns may be subtracted if the load space cover 101 is to stop slightly short of the second physical travel stop in normal use. The soft close value SCV2 may be modified using a similar approach.

The method 800 terminates at block 816.

For purposes of this disclosure, it is to be understood that the controller(s) described herein can each comprise a control unit or computational device having one or more electronic processors. A vehicle and/or a system thereof may comprise a single control unit or electronic controller or alternatively different functions of the controller(s) may be embodied in, or hosted in, different control units or controllers. A set of instructions could be provided which, when executed, cause said controller(s) or control unit(s) to implement the control techniques described herein (including the described method(s)). The set of instructions may be embedded in one or more electronic processors, or alternatively, the set of instructions could be provided as software to be executed by one or more electronic processor(s). For example, a first controller may be implemented in software run on one or more electronic processors, and one or more other controllers may also be implemented in software run on one or more electronic processors, optionally the same one or more processors as the first controller. It will be appreciated, however, that other arrangements are also useful, and therefore, the present disclosure is not intended to be limited to any particular arrangement. In any event, the set of instructions described above may be embedded in a computer-readable storage medium (e.g., a non-transitory computer-readable storage medium) that may comprise any mechanism for storing information in a form readable by a machine or electronic processors/computational device, including, without limitation: a magnetic storage medium (e.g., floppy diskette); optical storage medium (e.g., CD-ROM); magneto optical storage medium; read only memory (ROM); random access memory (RAM); erasable programmable memory (e.g., EPROM and EEPROM); flash memory; or electrical or other types of medium for storing such information/instructions.

It will be appreciated that various changes and modifications can be made to the present invention without departing from the scope of the present application.

The blocks illustrated in FIGS. 7-8 may represent steps in a method and/or sections of code in the computer program 208. The illustration of a particular order to the blocks does not necessarily imply that there is a required or preferred order for the blocks and the order and arrangement of the block may be varied. Furthermore, it may be possible for some steps to be omitted.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described. Although functions have been described with reference to certain features, those functions may be performable by other features whether described or not.

Although features have been described with reference to certain embodiments, those features may also be present in other embodiments whether described or not.

## Claims

1. A control system (200) for controlling a powered vehicle load space cover (101), the control system comprising one or more controllers (201), the control system configured to:
request (704) an actuator (104) to deploy the powered vehicle load space cover to a target position (RP, EP);
receive (703, 714, 720) from a first sensing means (600, 602) a position feedback signal (604A, 604B) during the deployment, indicative of how far the actuator has deployed the powered vehicle load space cover;
continue (704) to request the deployment until (722) a calibrated target value (CTV1, CTV2) of the position feedback signal is reached, indicating that the target position has been reached;
**characterized in that** the control system is further configured to:
monitor (802) whether a recalibration condition is satisfied wherein the recalibration condition is based on a number of deployments of the powered vehicle load space cover, and/or a time and/or mileage, since a previous calibration or a previous recalibration; and
based on satisfaction of the recalibration condition, cause (804-814) a recalibration of the target value, wherein the recalibration comprises:
causing the recalibration (804-814) of the target value in response to a first request, initiated by a first user action at a first time, to deploy the powered vehicle load space cover in a first direction, wherein the deployment to the physical travel stop is in the first direction, wherein the recalibration of the target value comprises:
requesting (806) the actuator to deploy the powered vehicle load space cover until a physical travel stop is reached;
receiving (808) from a second sensing means (210) a calibration reference signal, different from the position feedback signal, that is configured to indicate when the physical travel stop is reached; and
in dependence on the calibration reference signal indicating (810) the physical travel stop, modifying (812, 814) the target value relative to a value of the position feedback signal corresponding to the physical travel stop;
causing recalibration (804-814) of a second target value of the position feedback signal in response to a second request, initiated by a second different user action at a second later time, to deploy the powered vehicle load space cover in a second direction opposite the first direction, wherein the recalibration of the second target value comprises:
requesting (806) the actuator to deploy the powered vehicle load space cover until a second physical travel stop is reached;
receiving (808) the calibration reference signal; and
in dependence on the calibration reference signal indicating (810) the second physical travel stop, modifying (812, 814) the second target value relative to a value of the position feedback signal corresponding to the second physical travel stop.

2. The control system of claim 1, wherein the first user action comprises causing opening of a vehicle tailgate (3) associated with the vehicle load space cover, and wherein the second user action comprises causing closing of the vehicle tailgate.

3. The control system of claim 1, wherein the first user action comprises user actuation of a cover extension user input control (212A), and wherein the second user action comprises user actuation of a cover retraction user input control (212B).

4. The control system of any preceding claim, configured to abort the recalibration in dependence on the calibration reference signal indicating a physical travel stop while a value of the position feedback signal is outside an acceptable range of values.

5. The control system of any preceding claim, configured to:
receive (706) an obstacle reference signal from the second sensing means, the obstacle reference signal configured to indicate whether the powered vehicle load space cover is obstructed; and
cease requesting (710) the actuator to deploy the powered vehicle load space cover to the target position in dependence on the obstacle reference signal indicating that the powered vehicle load space cover is obstructed.

6. The control system of any preceding claim, wherein the first sensing means comprises one or more Hall effect sensors.

7. The control system of any preceding claim, wherein the second sensing means comprises a load measuring circuit (210), indicative of a load on the actuator.

8. The control system of any preceding claim, configured to request (704) the deployment to the target position at a first speed (V1) until a soft close value (SCV1, SCV2) based on the position feedback signal is reached, and to request the deployment (718) to the target position at a second slower speed (V2) after the soft close value of the position feedback signal is reached.

9. The control system of any preceding claim, wherein the calibrated target value and the modified target value is within 5% of, but not the same as, the value of the position feedback signal corresponding to the physical travel stop.

10. A powered vehicle load space cover system (100) comprising the control system (200) of any preceding claim, the actuator (104) of any preceding claim, and the powered vehicle load space cover (100) of any preceding claim.

11. A vehicle (1) comprising the powered vehicle load space cover system (100) of claim 10 or the control system (200) of any one of claims 1 to 11.

12. A method (700, 800) of controlling a powered vehicle load space cover (101), the method comprising:
requesting (704) an actuator (104) to deploy the powered vehicle load space cover to a target position (EP, RP);
receiving (703, 714, 720) from a first sensing means (600, 602) a position feedback signal (604A, 604B) during the deployment, indicative of how far the actuator has deployed the powered vehicle load space cover;
continuing (704) to request the deployment until (722) a calibrated target value (CTV1, CTV2) of the position feedback signal is reached, indicating that the target position has been reached;
monitoring (802) whether a recalibration condition is satisfied wherein the recalibration condition is based on a number of deployments of the powered vehicle load space cover, and/or a time and/or mileage, since a previous calibration or a previous recalibration; and
based on satisfaction of the recalibration condition, causing (804-814) a recalibration of the target value, wherein the recalibration comprises:
causing the recalibration (804-814) of the target value in response to a first request, initiated by a first user action at a first time, to deploy the powered vehicle load space cover in a first direction, wherein the deployment to the physical travel stop is in the first direction, wherein the recalibration of the target value comprises:
requesting (806) the actuator to deploy the powered vehicle load space cover until a physical travel stop is reached;
receiving (808) from a second sensing means (210) a calibration reference signal, different from the position feedback signal, that is configured to indicate when the physical travel stop is reached; and
in dependence on the calibration reference signal indicating (810) the physical travel stop, modifying (812, 814) the target value relative to a value of the position feedback signal corresponding to the physical travel stop;
causing recalibration (804-814) of a second target value of the position feedback signal in response to a second request, initiated by a second different user action at a second later time, to deploy the powered vehicle load space cover in a second direction opposite the first direction, wherein the recalibration of the second target value comprises:
requesting (806) the actuator to deploy the powered vehicle load space cover until a second physical travel stop is reached;
receiving (808) the calibration reference signal; and
in dependence on the calibration reference signal indicating (810) the second physical travel stop, modifying (812, 814) the second target value relative to a value of the position feedback signal corresponding to the second physical travel stop.

13. A computer software product containing computer software (208) that, when executed, is arranged to perfom the method (700, 800) according to claim 12.

## Patentansprüche

1. Steuersystem (200) zum Steuern einer angetriebenen Fahrzeugladeraumabdeckung, (101), wobei das Steuersystem eine oder mehrere Steuerungen (201) umfasst, wobei das Steuersystem für Folgendes konfiguriert ist:
Anfordern (704) eines Aktuators (104), die angetriebene Fahrzeugladeraumabdeckung in eine Zielposition (RP, EP) auszufahren;
Empfangen (703, 714, 720) eines Positionsrückmeldungssignals (604A, 604B) von einem ersten Erfassungsmittel (600, 602) während des Ausfahrvorgangs, das anzeigt, wie weit der Aktuator die angetriebene Fahrzeugladeraumabdeckung ausgefahren hat;
Aufrechterhalten (704) der Anforderung des Ausfahrvorgangs bis (722) ein kalibrierter Zielwert (CTV1, CTV2) des Positionsrückmeldungssignals erreicht ist, das anzeigt, dass die Zielposition erreicht wurde;
**dadurch gekennzeichnet, dass** das Steuersystem ferner konfiguriert ist zum:
Überwachen (802), ob eine Rekalibrierungsbedingung erfüllt ist, wobei die Rekalibrierungsbedingung auf einer Anzahl von Ausfahrvorgängen der angetriebenen Fahrzeugladeraumabdeckung und/oder einer Zeit und/oder einer Kilometerleistung seit einer vorherigen Kalibrierung oder einer vorherigen Rekalibrierung basiert; und
basierend auf der Erfüllung der Rekalibrierungsbedingung, Veranlassen (804-814) einer Rekalibrierung des Zielwerts, wobei die Rekalibrierung umfasst:
Veranlassen der Rekalibrierung (804-814) des Zielwerts als Reaktion auf eine erste Anforderung, initiiert durch eine erste Benutzeraktion zu einem ersten Zeitpunkt, die angetriebene Fahrzeugladeraumabdeckung in einer ersten Richtung auszufahren, wobei der Ausfahrvorgang bis zum physischen Bewegungsanschlag in der ersten Richtung erfolgt, wobei die Rekalibrierung des Zielwerts umfasst:
Anfordern (806) des Aktuators, die angetriebene Fahrzeugladeraumabdeckung auszufahren, bis ein physischer Bewegungsanschlag erreicht ist;
Empfangen (808), von einem zweiten Erfassungsmittel (210), eines Kalibrierungsreferenzsignals, das sich von dem Positionsrückmeldungssignal unterscheidet und das konfiguriert ist, um anzuzeigen, sobald der physische Bewegungsanschlag erreicht ist; und
in Abhängigkeit von dem Kalibrierungsreferenzsignal, das den physischen Bewegungsanschlag anzeigt (810), Modifizieren (812, 814) des Zielwerts relativ zu einem Wert des Positionsrückmeldungssignals, der dem physischen Bewegungsanschlag entspricht;
Veranlassen einer Rekalibrierung (804-814) eines zweiten Zielwerts des Positionsrückmeldungssignals als Reaktion auf eine zweite Anforderung, die durch eine zweite, andere Benutzeraktion zu einem zweiten, späteren Zeitpunkt initiiert wird, die angetriebene Fahrzeugladeraumabdeckung in eine zweite Richtung, entgegengesetzt zu der ersten Richtung, auszufahren, wobei die Rekalibrierung des zweiten Zielwerts umfasst:
Anfordern (806) des Aktuators, die angetriebene Fahrzeugladeraumabdeckung auszufahren, bis ein zweiter physischer Bewegungsanschlag erreicht ist;
Empfangen (808) des Kalibrierungsreferenzsignals; und
in Abhängigkeit von dem Kalibrierungsreferenzsignal, das den zweiten physischen Bewegungsanschlag anzeigt (810), Modifizieren (812, 814) des zweiten Zielwerts relativ zu einem Wert des Positionsrückmeldungssignals, der dem zweiten physischen Bewegungsanschlag entspricht.

2. Steuersystem nach Anspruch 1, wobei die erste Benutzeraktion das Veranlassen des Öffnens einer Fahrzeugheckklappe (3) umfasst, die der Fahrzeugladeraumabdeckung zugeordnet ist, und wobei die zweite Benutzeraktion das Veranlassen des Schließens der Fahrzeugheckklappe umfasst.

3. Steuersystem nach Anspruch 1, wobei die erste Benutzeraktion eine Benutzerbetätigung einer Abdeckungsausfahr-Benutzereingabesteuerung (212A) umfasst, und wobei die zweite Benutzeraktion eine Benutzerbetätigung einer Abdeckungseinfahr-Benutzereingabesteuerung (212B) umfasst.

4. Steuersystem nach einem der vorstehenden Ansprüche, das konfiguriert ist, um die Rekalibrierung in Abhängigkeit davon abzubrechen, dass das Kalibrierungsreferenzsignal einen physischen Bewegungsanschlag anzeigt, während ein Wert des Positionsrückmeldungssignals außerhalb eines akzeptablen Bereichs von Werten liegt.

5. Steuersystem nach einem der vorstehenden Ansprüche, das konfiguriert ist zum:
Empfangen (706) eines Hindernisreferenzsignals von dem zweiten Erfassungsmittel, wobei das Hindernisreferenzsignal konfiguriert ist, um anzuzeigen, ob die angetriebene Fahrzeugladeraumabdeckung blockiert ist; und
Einstellen des Anforderns (710) des Aktuators, die angetriebene Fahrzeugladeraumabdeckung in die Zielposition auszufahren, in Abhängigkeit von dem Hindernisreferenzsignal, das anzeigt, dass die angetriebene Fahrzeugladeraumabdeckung blockiert ist.

6. Steuersystem nach einem der vorstehenden Ansprüche, wobei das erste Erfassungsmittel einen oder mehrere Hall-Effekt-Sensoren umfasst.

7. Steuersystem nach einem der vorstehenden Ansprüche, wobei das zweite Erfassungsmittel eine Lastmessschaltung (210) umfasst, die eine Last an dem Aktor anzeigt.

8. Steuersystem nach einem der vorstehenden Ansprüche, das konfiguriert ist, um den Ausfahrvorgang in die Zielposition mit einer ersten Geschwindigkeit (V1) anzufordern (704), bis ein auf dem Positionsrückmeldungssignal basierender Soft-Close-Wert (SCV1, SCV2) erreicht ist, und den Ausfahrvorgang (718) in die Zielposition mit einer zweiten, langsameren Geschwindigkeit (V2) anzufordern, nachdem der Soft-Close-Wert des Positionsrückmeldungssignals erreicht ist.

9. Steuersystem nach einem der vorstehenden Ansprüche, wobei der kalibrierte Zielwert und der modifizierte Zielwert innerhalb von 5 % des Wertes des Positionsrückmeldungssignal, das dem physischen Bewegungsanschlag entspricht, liegen, aber nicht gleich diesem sind.

10. Angetriebenes Fahrzeugladeraumabdeckungssystem (100), umfassend das Steuersystem (200) nach einem der vorstehenden Ansprüche, den Aktuator (104) nach einem der vorstehenden Ansprüche, und die angetriebene Fahrzeugladeraumabdeckung (100) nach einem der vorstehenden Ansprüche.

11. Fahrzeug (1), umfassend das angetriebene Fahrzeugladeraumabdeckungssystem (100) nach Anspruch 10 oder das Steuersystem (200) nach einem der Ansprüche 1 bis 11.

12. Verfahren (700, 800) zum Steuern einer angetriebenen Fahrzeugladeraumabdeckung (101), wobei das Verfahren Folgendes umfasst:
Anfordern (704) eines Aktuators (104), die angetriebene Fahrzeugladeraumabdeckung in eine Zielposition (EP, RP) auszufahren;
Empfangen (703, 714, 720) eines Positionsrückmeldungssignals (604A, 604B) von einem ersten Erfassungsmittel (600, 602) während des Ausfahrvorgangs, das anzeigt, wie weit der Aktuator die angetriebene Fahrzeugladeraumabdeckung ausgefahren hat;
Aufrechterhalten (704) der Anforderung des Ausfahrvorgangs, bis (722) ein kalibrierter Zielwert (CTV1, CTV2) des Positionsrückmeldungssignals erreicht ist, das anzeigt, dass die Zielposition erreicht wurde;
Überwachen (802), ob eine Rekalibrierungsbedingung erfüllt ist, wobei die Rekalibrierungsbedingung auf einer Anzahl von Ausfahrvorgängen der angetriebenen Fahrzeugladeraumabdeckung und/oder einer Zeit und/oder einem Kilometerstand seit einer vorherigen Kalibrierung oder einer vorherigen Rekalibrierung basiert; und
basierend auf der Erfüllung der Rekalibrierungsbedingung, Veranlassen (804-814) einer Rekalibrierung des Zielwerts, wobei die Rekalibrierung umfasst:
Veranlassen der Rekalibrierung (804-814) des Zielwerts als Reaktion auf eine erste Anforderung, initiiert durch eine erste Benutzeraktion zu einem ersten Zeitpunkt, die angetriebene Fahrzeugladeraumabdeckung in einer ersten Richtung auszufahren, wobei der Ausfahrvorgang bis zum physischen Bewegungsanschlag in der ersten Richtung erfolgt, wobei die Rekalibrierung des Zielwerts umfasst:
Anfordern (806) des Aktuators, die angetriebene Fahrzeugladeraumabdeckung auszufahren, bis ein physischer Bewegungsanschlag erreicht ist;
Empfangen (808), von einem zweiten Erfassungsmittel (210), eines Kalibrierungsreferenzsignals, das sich von dem Positionsrückmeldungssignal unterscheidet und das konfiguriert ist, um anzuzeigen, sobald der physische Bewegungsanschlag erreicht ist; und
in Abhängigkeit von dem Kalibrierungsreferenzsignal, das den physischen Bewegungsanschlag anzeigt (810), Modifizieren (812, 814) des Zielwerts relativ zu einem Wert des Positionsrückmeldungssignals, der dem physischen Bewegungsanschlag entspricht;
Veranlassen einer Rekalibrierung (804-814) eines zweiten Zielwerts des Positionsrückmeldungssignals als Reaktion auf eine zweite Anforderung, die durch eine zweite, andere Benutzeraktion zu einem zweiten, späteren Zeitpunkt initiiert wird, die angetriebene Fahrzeugladeraumabdeckung in eine zweite Richtung, entgegengesetzt zu der ersten Richtung, auszufahren, wobei die Rekalibrierung des zweiten Zielwerts umfasst:
Anfordern (806) des Aktuators, die angetriebene Fahrzeugladeraumabdeckung auszufahren, bis ein zweiter physischer Bewegungsanschlag erreicht ist;
Empfangen (808) des Kalibrierungsreferenzsignals; und
in Abhängigkeit von dem Kalibrierungsreferenzsignal, das den zweiten physischen Bewegungsanschlag anzeigt (810), Modifizieren (812, 814) des zweiten Zielwerts relativ zu einem Wert des Positionsrückmeldungssignals, der dem zweiten physischen Bewegungsanschlag entspricht.

13. Computersoftwareprodukt, das Computersoftware (208) enthält, die, wenn sie ausgeführt wird, angeordnet ist, um das Verfahren (700, 800) nach Anspruch 12 durchzuführen.

## Revendications

1. Système de commande (200) permettant de commander un couvre-espace de chargement motorisé de véhicule (101), le système de commande comprenant un ou plusieurs dispositifs de commande (201), le système de commande étant configuré pour :
demander (704) à un actionneur (104) de déployer le couvre-espace de chargement motorisé de véhicule vers une position cible (RP, EP) ;
recevoir (703, 714, 720), d'un premier moyen de détection (600, 602), un signal de retour de position (604A, 604B) pendant le déploiement, indicatif de la distance sur laquelle l'actionneur a déployé le cache-bagages motorisé de véhicule ;
continuer (704) à demander le déploiement jusqu'à ce que (722) une valeur cible étalonnée (CTV1, CTV2) du signal de retour de position soit atteinte, indiquant que la position cible a été atteinte ;
**caractérisé en ce que** le système de commande est configuré en outre pour :
surveiller (802) si une condition de recalibrage est satisfaite, dans lequel la condition de recalibrage est basée sur un nombre de déploiements du couvre-bagages motorisé du véhicule, et/ou une durée et/ou un kilométrage, depuis un calibrage précédent ou un recalibrage précédent ; et
sur la base de la satisfaction de la condition de réétalonnage, provoquer (804-814) un réétalonnage de la valeur cible, dans lequel le réétalonnage comprend :
le fait de provoquer le recalibrage (804-814) de la valeur cible en réponse à une première demande, initiée par une première action d'utilisateur à un premier instant, à déployer le cache-bagages motorisé de véhicule dans une première direction, dans lequel le déploiement jusqu'à la butée de fin de course physique s'effectue dans la première direction, dans lequel le recalibrage de la valeur cible comprend :
la demande (806), à l'actionneur, de déployer le couvre-espace de chargement motorisé du véhicule jusqu'à ce qu'une butée de fin de course physique soit atteinte ;
la réception (808) en provenance d'un second moyen de détection (210) d'un signal de référence d'étalonnage, différent du signal de retour de position, qui est configuré pour indiquer lorsque la butée de fin de course physique est atteinte ; et
en fonction du signal de référence d'étalonnage indiquant (810) la butée de fin de course physique, la modification (812, 814) de la valeur cible par rapport à une valeur du signal de retour de position correspondant à la butée de fin de course physique ;
le fait de provoquer le réétalonnage (804-814) d'une seconde valeur cible du signal de retour de position en réponse à une seconde demande, initiée par une seconde action d'utilisateur différente à un second instant ultérieur, à déployer le couvre-espace de chargement motorisé de véhicule dans une seconde direction opposée à la première direction, dans lequel le réétalonnage de la seconde valeur cible comprend :
la demande (806), à l'actionneur, de déployer le couvre-espace de chargement motorisé du véhicule jusqu'à ce qu'une seconde butée de fin de course physique soit atteinte ;
la réception (808) du signal de référence d'étalonnage ; et
en fonction du signal de référence d'étalonnage indiquant (810) la seconde butée de fin de course physique, la modification (812, 814) de la seconde valeur cible par rapport à une valeur du signal de retour de position correspondant à la seconde butée de fin de course physique.

2. Système de commande selon la revendication 1, dans lequel la première action d'utilisateur comprend le fait de provoquer l'ouverture d'un hayon de véhicule (3) associé au couvre-espace de chargement de véhicule, et dans lequel la seconde action d'utilisateur comprend le fait de provoquer la fermeture du hayon de véhicule.

3. Système de commande selon la revendication 1, dans lequel la première action de l'utilisateur comprend l'actionnement par l'utilisateur d'une commande d'entrée utilisateur d'extension de couvercle (212A), et dans lequel la seconde action de l'utilisateur comprend l'actionnement par l'utilisateur d'une commande d'entrée utilisateur de rétraction de couvercle (212B).

4. Système de commande selon l'une quelconque revendication précédente, configuré pour interrompre le réétalonnage en fonction du signal de référence d'étalonnage indiquant un arrêt de déplacement physique alors qu'une valeur du signal de retour de position est en dehors d'une plage de valeurs acceptable.

5. Système de commande selon l'une quelconque revendication précédente, configuré pour :
recevoir (706) un signal de référence d'obstacle en provenance du second moyen de détection, le signal de référence d'obstacle étant configuré pour indiquer si le cache-bagages motorisé du véhicule est obstrué ; et
cesser de demander (710) à l'actionneur de déployer le couvre-espace de chargement motorisé de véhicule jusqu'à la position cible en fonction du signal de référence d'obstacle indiquant que le couvre-espace de chargement motorisé de véhicule est obstrué.

6. Système de commande selon l'une quelconque revendication précédente, dans lequel le premier moyen de détection comprend un ou plusieurs capteurs à effet Hall.

7. Système de commande selon l'une quelconque revendication précédente, dans lequel le second moyen de détection comprend un circuit de mesure de charge (210), indicatif d'une charge sur l'actionneur.

8. Système de commande selon l'une quelconque revendication précédente, configuré pour demander (704) le déploiement vers la position cible à une première vitesse (V1) jusqu'à ce qu'une valeur de fermeture en douceur (SCV1, SCV2) basée sur le signal de retour de position soit atteinte, et pour demander le déploiement (718) vers la position cible à une seconde vitesse plus lente (V2) après que la valeur de fermeture en douceur du signal de retour de position est atteinte.

9. Système de commande selon l'une quelconque revendication précédente, dans lequel la valeur cible étalonnée et la valeur cible modifiée sont à moins de 5 % de, mais ne sont pas identiques à, la valeur du signal de retour de position correspondant à la butée de fin de course physique.

10. Système de couverture d'espace de chargement de véhicule motorisé (100) comprenant le système de commande (200) selon l'une quelconque revendication précédente, l'actionneur (104) selon l'une quelconque revendication précédente, et la couverture d'espace de chargement de véhicule motorisée (100) selon l'une quelconque revendication précédente.

11. Véhicule (1) comprenant le système motorisé de couverture d'espace de chargement de véhicule (100) selon la revendication 10 ou le système de commande (200) selon l'une quelconque des revendications 1 à 11.

12. Procédé (700, 800) de commande d'un couvre-espace de chargement motorisé de véhicule (101), le procédé comprenant :
la demande (704), à un actionneur (104), de déployer le couvre-espace de chargement motorisé de véhicule vers une position cible (EP, RP) ;
la réception (703, 714, 720) en provenance d'un premier moyen de détection (600, 602) d'un signal de retour de position (604A, 604B) pendant le déploiement, indicatif de la distance sur laquelle l'actionneur a déployé le couvre-espace de chargement motorisé de véhicule ;
le fait de continuer (704) à demander le déploiement jusqu'à ce que (722) une valeur cible étalonnée (CTV1, CTV2) du signal de retour de position soit atteinte, indiquant que la position cible a été atteinte ;
le fait de surveiller (802) si une condition de recalibrage est satisfaite, dans lequel la condition de recalibrage est basée sur un nombre de déploiements de la couverture d'espace de chargement motorisée de véhicule, et/ou une durée et/ou un kilométrage, depuis un calibrage précédent ou un recalibrage précédent ; et
sur la base de la satisfaction de la condition de recalibrage, le fait de provoquer (804-814) un recalibrage de la valeur cible, dans lequel le recalibrage comprend :
le fait de provoquer le recalibrage (804-814) de la valeur cible en réponse à une première demande, initiée par une première action d'utilisateur à un premier instant, à déployer le cache-bagages motorisé de véhicule dans une première direction, dans lequel le déploiement jusqu'à la butée de fin de course physique s'effectue dans la première direction, dans lequel le recalibrage de la valeur cible comprend :
la demande (806), à l'actionneur, de déployer le couvre-espace de chargement motorisé du véhicule jusqu'à ce qu'une butée de fin de course physique soit atteinte ;
la réception (808) en provenance d'un second moyen de détection (210) d'un signal de référence d'étalonnage, différent du signal de retour de position, qui est configuré pour indiquer lorsque la butée de fin de course physique est atteinte ; et
en fonction du signal de référence d'étalonnage indiquant (810) la butée de fin de course physique, la modification (812, 814) de la valeur cible par rapport à une valeur du signal de retour de position correspondant à la butée de fin de course physique ;
le fait de provoquer le réétalonnage (804-814) d'une seconde valeur cible du signal de retour de position en réponse à une seconde demande, initiée par une seconde action d'utilisateur différente à un second instant ultérieur, à déployer le couvre-espace de chargement motorisé de véhicule dans une seconde direction opposée à la première direction, dans lequel le réétalonnage de la seconde valeur cible comprend :
la demande (806), à l'actionneur, de déployer le couvre-espace de chargement motorisé du véhicule jusqu'à ce qu'une seconde butée de fin de course physique soit atteinte ;
la réception (808) du signal de référence d'étalonnage ; et
en fonction du signal de référence d'étalonnage indiquant (810) la seconde butée de fin de course physique, la modification (812, 814) de la seconde valeur cible par rapport à une valeur du signal de retour de position correspondant à la seconde butée de fin de course physique.

13. Produit logiciel informatique contenant un logiciel informatique (208) qui, lorsqu'il est exécuté, est agencé pour effectuer le procédé (700, 800) selon la revendication 12.
